# EUROPEAN PATENT SPECIFICATION

(11) **EP 2 573 403 B1**
(45) Date of publication and mention of the grant of the patent: **06.12.2017**
(21) Application number: 11007661.9
(22) Date of filing: 20.09.2011
(51) Int. Cl.: F04D 15/00

(54) **Pump**
Pumpe
Pompe

(43) Date of publication of application: 27.03.2013
(73) Proprietor: Grundfos Holding A/S, 8850 Bjerringbro (DK)
(72) Inventor: Strom, Niels Jorgen, 8382 Hinnerup (DK); Bomholt, John, 8382 Hinnerup (DK)
(74) Representative: Hemmer, Arnd

(56) References cited:
- EP-A1- 1 063 751
- US-A- 5 259 445
- US-A- 5 329 991
- US-A1- 2005 196 284
- US-A1- 2007 154 323
- US-A1- 2009 069 749

## Description

The present invention generally relates to a circulator pump. The invention more particularly relates to a pump having an interface for receiving data information that can be executed by the pump's microprocessor.

Many modern pumps are provided with various types of controls in order to control the pumps in specific ways. Circulator pumps are often intended to deliver a specific head and flow rate at given circumstances in order to meet preset requirements. When a pump has been developed, produced and sold there will always be several users that have specific requirements that cannot be met by using the pump. The pump will be equipped with a standard control that is delivered with a limited number of user options and applications.

Prior art pumps may be controlled according to the control patterns that the pump control is provided with. Some pump controls are configured to be adjusted by changing one or more parameters. Adjusting may be done by the user of the pump, e.g. by using an interface that is integrated in the control device.

It is known to have fixed functions including settable parameters, such as a constant pressure curve, where the pressure set point may be changed. Another example is a fixed night-time duty that can be selected by the user of the pump. Document EP1063751 A1 is another example where the user can select the time when a pump should be operational.

If the user of the pump needs a specific application that is not present in the control device, the pump will not be able to perform according to the user's specific requirement. This is a major challenge for many users.

Therefore there is need for a circulator pump that is capable of adjusting the control device according to user needs, even if the user needs is a specific application that is not present in the control device.

Accordingly, it is an object of the present invention to provide a circulator pump having a control device that is capable of running applications created on the basis of the user's specific requirement.

The pump according to the invention is an electrically driven circulator pump comprising an electrical motor; a control device that comprises storage means and a microprocessor and is configured to receive data information. The control device is adapted to control the activity of the motor. The storage means comprises a user application storage and an interpreter storage and the control device is configured to receive data information that constitutes a user application that can be executed by the pump's microprocessor as one or more user application sequences.

Thus, the pump according to the invention is capable of adjusting the control device according to specific needs (e.g. specific user needs) even if the needs require a specific application that is not already present in the control device. Hereby, a pump according to the invention may eliminate the need for an external pump controller in demanding applications, since the control device within the pump can be programmed in a way that makes it possible to operate the pump according to specific requirements. The pump according to the invention may be setup by the user in order to meet user specific requirements that cannot be met by using prior art pumps. A user application may be understood as a kind of "micro".

The electrical motor may, in principle be any electrical motor suitable for driving a pump. It may be an advantage if the electrical motor is equipped with a frequency converter for regulating the speed of the motor. The motor may be a permanent magnet motor that is controlled by a frequency converter. Thus it would be possible to adapt the speed of the pump to specific requirements and hereby save energy.

Advantageously, the control device is provided in a control box that is arranged on the motor or next to the motor.

The storage means may be any suitable type of computer data storage. The storage means may be any physical device configured to store data or a sequence of instructions constituting a user application on a temporary or permanent basis.

By the term data information is meant information in a form suitable for use with the control device. The data information may be any suitable type of information that can be received by the control device. The data information may, for instance, be a sequence of instructions constituting a program or data indicating or representing a set point e.g. for the temperature, at which the control device is intended to switch off the electric motor.

By the term user application is meant an application that can be executed by the pump's microprocessor. The user application may comprise one or more sequences. A user application can be used to control a pump in a user specific manner. A user application may comprise one or more conditions that have to be fulfilled in order to carry out an action. A user application may include a program in any suitable form. An action may, by way of example, be increasing the speed of the pump from a first level to a higher level. A user application may be a user defined user application meaning that the user of the pump (or the installer of the pump) defines and/or creates the user application.

Advantageously, the control device is configured to receive data information that constitutes a user application applying a time scalar parameter. In this way time can be taken into account when an action is carried out. Thus, the actions can be time-dependent. In this way it is possible to apply different user applications at different times. By way of example, it is possible to apply a first pumping pattern during day time and another pumping pattern during night time. It is also possible to apply one pumping pattern during working days and another pumping pattern during weekends.

The user application storage is a storage that is allocated for storing of user applications.

The interpreter storage is a storage that is allocated for storing of an interpreter that is configured to interpret the user applications stored in the user application storage.

The object of the present invention can be achieved by a pump having the features defined in claim 1.

Other objects and further scope of applicability of the present invention will become apparent from the claims and the description given hereinafter.

Advantageously the control device is configured to receive data information comprising one or more operators, one or more scalar parameters, and one or more actions, where the data information constitute a user application that can be executed by the pump's microprocessor as one or more user application sequences.

It is beneficial that the control device is configured to receive data information that comprises one or more logical operators and one or more scalar parameters, one or more actions and one or more units, where the data information constitutes a user application that can be executed by the pump's microprocessor as one or more user application sequences. Hereby it is achieved that the pump is well suited for being setup according to typical requirements that can be expressed in one or more user applications that comprises one or more logical operators and one or more scalar parameter, one or more actions and one or more units. Thus the pump will be suited to meet most user requirements.

It is an advantage that the pump is configured to receive data information from one or more external devices and that the pump is configured to be controlled on the basis of the data information that is sent to the storage means of the control device from one or more external devices, that the data information that is sent to the storage means constitute a user application that is suitable for being executed by the pump's microprocessor, as one or more user application sequences.

Hereby it is achieved that the one or more external devices may be used to adjust the pump. It is possible to use several types of external devices to send data information to the pump.

Advantageously the pump comprises an interface that is configured to be used to provide data information to the storage means and that the data information constitute a user application that is suitable for being executed by the pump's microprocessor.

Hereby it is achieved that the user can input data directly to the pump by using the interface and an external device is not required in order to create a user application.

The interface may be any type of interface that the user of the pump can use to communicate with the control device. The interface may be a peripheral device such as a keyboard, a touch screen, or a remote control.

Advantageously the pump comprises a display that is configured to display a number of preset icons that correspond to a list of operators, parameters, and actions and that a user application can be made by selecting between the preset icons.

Hereby it is achieved that the user can generate a user application in a quick and easy way. The user may select the icons from a list. The display may be any type of suitable displays. The display may, by way of example, be an electronic visual display such as a touch screen that may be used to input data to the pump.

It is beneficial that the pump comprises a display that is configured to display a number of preset icons that correspond to a list of operators, parameters, units, and actions and that a user application can be made by selecting between the preset icons.

It is an advantage that the pump is configured to receive or upload user applications through a web forum or a web service.

Hereby it is achieved that the user of the pump may upload and download user applications to the pump so that the pump becomes capable of performing in accordance with specific requirements. It is also possible for the user to upload user applications. In this way other users may benefit from using the uploaded user applications.

It is beneficial that the pump is configured to receive user applications through a web service or a web forum.

The user of the pump may download user applications to the pump automatically from the Internet. It is possible to provide the pump with information that makes the pump capable of downloading user applications to make it capable of performing in accordance with user specific requirements.

Advantageously the pump is capable of only downloading user applications that are relevant to the specific pump type. This may be accomplished by using a specific pump information tag that is registered by the server, from which the user applications are being downloaded. The specific pump information tag may be any type of code or suitable tag that can be registered by the server from which the user applications are being downloaded.

It is an advantage that the pump is configured to receive user applications through an external storage means that is configured to be connected to the pump.

Hereby it is achieved that a number of preinstalled user applications can be provided to the pump by connecting the external storage means. This procedure may be quick and easy and it requires no internet connection or knowledge about how to download information. The external storage means may be plugged into the pump or into the control device of the pump, however; it may also be an external storage type that communicates wirelessly with the pump.

The external storage means may be any suitable type of hardware including an electronic flash memory data storage device, a hard disk, USB flash drive by way of example.

It would be an advantage that the pump is configured to receive user applications that is sent to the pump.

Advantageously the pump is configured to receive user applications via an email that is sent to the pump. Hereby it is achieved that the pump can be provided with specific user applications that are directed towards the pump. It is possible to send an email every time new applications are available for the pump.

Beneficially the pump is coupled to the Internet and the pump is configured to upload pump specific information to an external receiver and the pump is configured to perform automatic and selective download of user applications that are suitable for the specific pump type.

Hereby it is achieved that the pump is capable of downloading relevant user applications that is intended to be used in that specific pump type.

Advantageously the pump is connected to the Internet and is configured to perform automatic and selective download of information (e.g. weather forecast information) and use this information in one or more user applications on the basis of one or more preset criteria.

Hereby the pump will be capable of receiving information (e.g. about the weather) and use this information to adjust its operation. If, for example, the weather forecast anticipates a decreasing temperature the pump may change the user applications so that the pump is activated to a higher temperature threshold than before. This would be a desirable solution for a circulator pump according to the invention. It is important to underline that any relevant type of information may be used to adjust the operation of the pump.

The pump may be a centrifugal pump.

The pump is a circulator pump configured to circulate a fluid such as water or a cooling liquid. The circulator may, by way of example, be used for heating or cooling purposes.

Advantageously the pump is driven by a motor that is equipped with a frequency converter.

Advantageously the pump comprises a storage having a user application storage that is configured to store user applications; a basic function storage that is used to store basic applications, and an interpreter storage that is allocated for an interpreter that is configured to carry out interpretation of the user applications that are stored in the user application storage.

Advantageously, the pump has an interface comprising a keyboard and/or a track ball and/or a touch screen for inputting information into the control device.

It may be an advantage that the pump comprises a control device that is configured to turn the motor on and off and to change the speed of the motor.

Advantageously, the pump comprises at least one sensor;
- that the control device is adapted to receive sensor information from the at least one sensor and
- that the control device is configured to change the speed and/or activity of the pump on the basis on received sensor information.

The present invention will become more fully understood from the detailed description given herein below and the accompanying drawings which are given by way of illustration only, and thus, are not limitative of the present invention, and wherein:
Fig.1 shows a pump according to the invention;
Fig. 2 shows the two first steps of a first user application creation;
Fig. 3 shows the two last steps of the first user application creation;
Fig. 4 shows the two first steps of a second user application creation;
Fig. 5 shows two intermediate steps of the second user application creation;
Fig. 6 shows the two last steps of the second user application creation;
Fig. 7 shows a third user application creation;
Fig. 8a) shows a user application storage;
Fig. 8b) shows the storage of the control device of a pump according to the invention and
Fig. 9 shows a schematical view of a pump that communicates via the Internet.

Other objects and further scope of applicability of the present invention will become apparent from the detailed description given hereinafter.

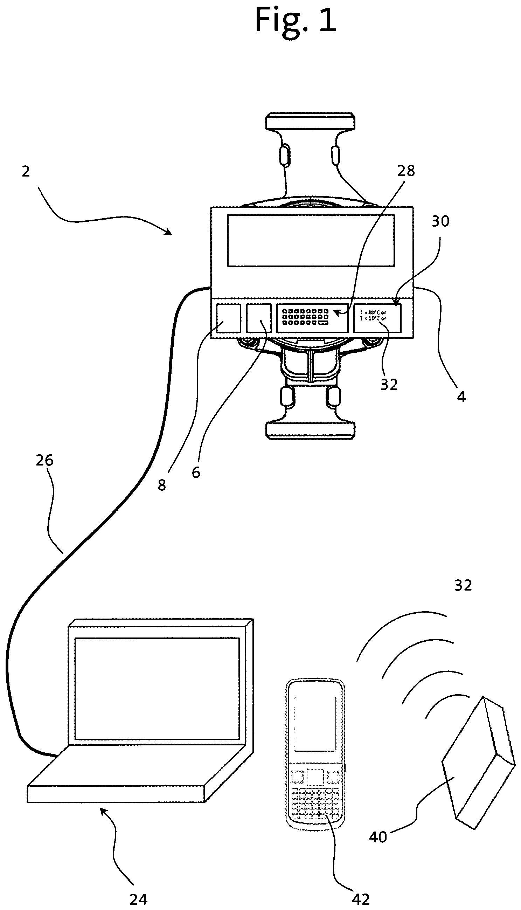

Referring now in detail to the drawings for the purpose of illustrating preferred embodiments of the present invention, a pump 2 according to a preferred embodiment of the present invention is illustrated in Fig. 1. The pump 2 comprises a control device 4 arranged in a control box; storage means 6; a microprocessor 8; an interface 28 and a display 30. A computer 24 is connected to the pump 2 via a cable 26. Data information can be provided to the pump's storage means 6 by using the computer 24. The computer 24 may be connected to the Internet from where it would be possible to download user applications. It would also be possible to create user applications directly on the computer 24 and send the user applications. It would also be possible to use the computer as a display in case that the pump does not have a display 30.

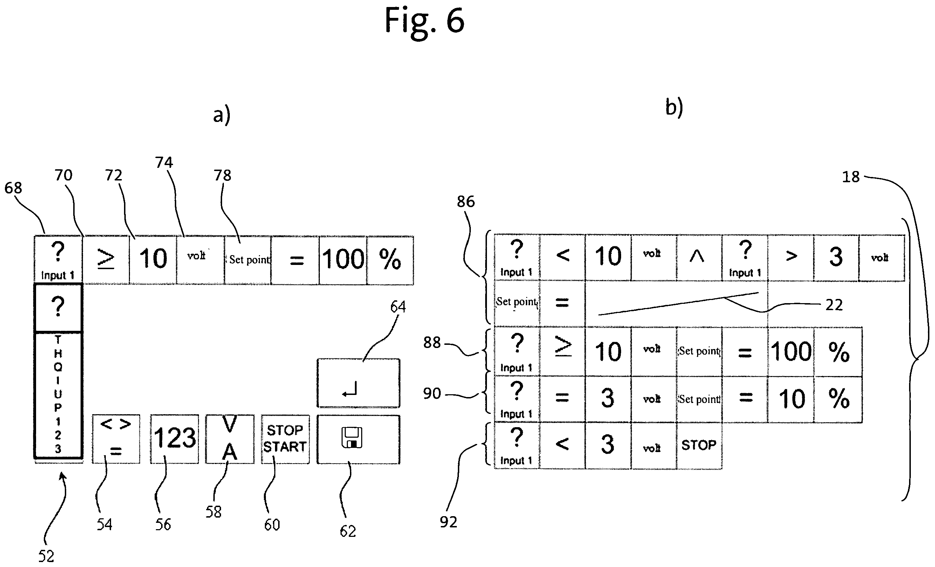

The user of the pump 2 may use a handheld device e.g. mobile phone 42 to send data information to the storage means 6 of the pump 2. It would also be possible to use a remote control 40 to send data information to the pump's storage means 6. The display 30 of the pump 2 shows a number of icons 32. The user of the pump 2 can easily compose a user application 18 by using these icons 32. In one embodiment according to the invention the pump 2 comprises a visual display 30 that is a touch screen that may be used to input data and hereby create a user application 18 (see Fig. 6).

It is possible to use wireless communication between the computer 24 and the pump 2 and between the mobile phone 42 and the pump 2.

The control device 4 may be arranged in a control box that is arranged on the motor of the pump 2 or adjacent to the motor of the pump 2. However, the control device 4 may be arranged in a box that is mechanically separated from the pump 2 and electrically connected to the pump 2 via a cable. Preferable the control device 4 comprises means for sending and receiving information, for instance by using radio communication.

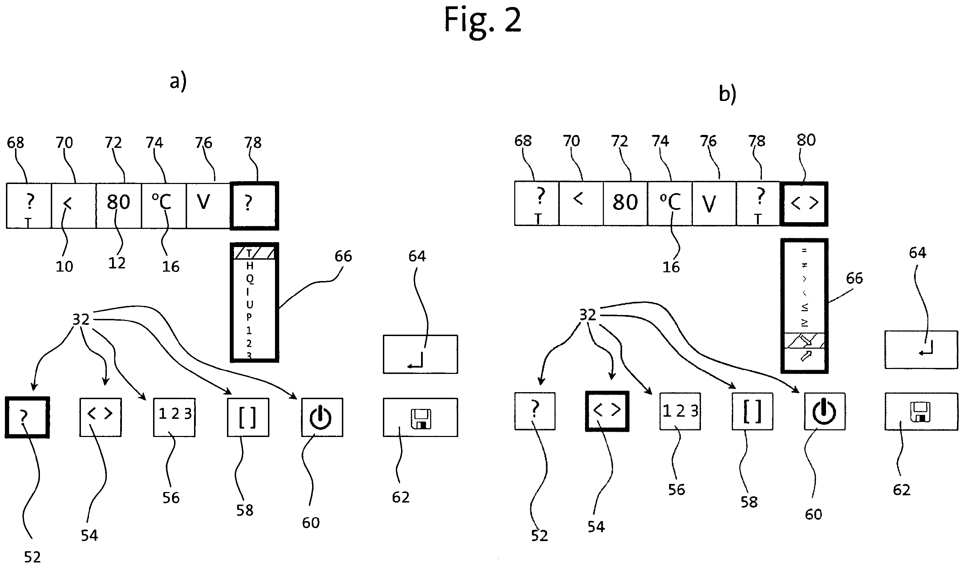

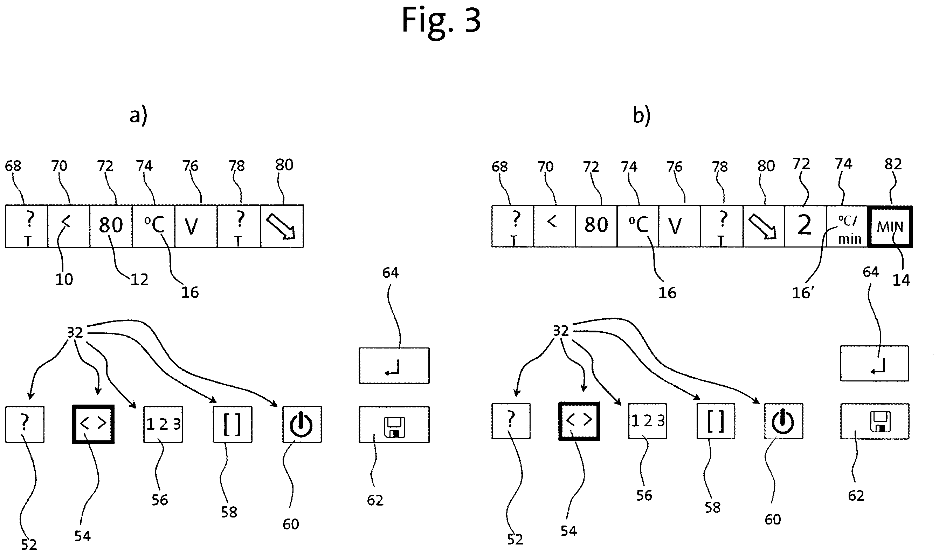

Fig. 2 a) illustrates one way of creating a user application 18. Fig. 3 a) and Fig. 3 b) show the views of a display 30 during creation of a user application 18. At the bottom area of the display 30 a list of predefined boxes 52, 54, 56, 58 and 60 are provided. The variable box 52 is highlighted and symbolised by a question mark "?", that represents a variable, which by way of example, may be temperature or pressure. In the upper area of the display 30 the box 68 shows that the user application 18 comprises a sequence that begins with a temperature variable. The temperature is indicated with a "T" in the box 68.

The box 54 comprises operators and is symbolised by the mathematical symbols "less than" (<) and "greater than" (>). Other useful operators could be "equal to" (=), "less than or equal to" (≤) or "greater than or equal to" (≥). The operator may be a logical operator but it does not have to be; however, the operator box 70 shows that the second symbol in the user application sequence is a "less than" symbol (<) indicating that temperatures below a certain limit is essential for the user application 18. Preferable the pump 2 comprises a temperature sensor.

The box 56 symbolises numerical values that can be selected by the user of the pump 2. In the numerical value box 56 the eligible numerical values are symbolised by the numbers "1 2 3". In the upper area of the display the box 72 shows that the third symbol in the user application sequence is a scalar parameter 12 and that it has the value 80.

The box 58 symbolises a unit that can be selected by the user of the pump 2. The unit box 58 is symbolised by the symbol "[ ]". In the upper area of the display the box 74 shows that the fourth symbol in the user application sequence is the unit 16 is a temperature unit "°C".

The box 60 symbolises an action that can be carried out (e.g. start or stop of the motor of the pump 2). In Fig. 2 and Fig. 3 the action box 60 is symbolised by a traditional start/stop symbol. The new line box 64 is used to make a new line and the save and run box 62 is used to save and run the user application. In the upper area of the display the box 76 shows a logical operator "or" indicated by the mathematical symbol "V" for or. The first box 78 from the right is highlighted and the user has selected to input a variable (that is why the variable box 52 is highlighted). Below the box 78 a drop-down menu box 66 appears and the selected variable is temperature; indicated with the symbol "T".

Preferable the control device 4 is configured to provide an explanation of all symbols to the user. The explanation may be disclosed in any suitable way, e.g. by demand of the user that may press on a help function key (not shown).

Fig. 2b illustrates a view of a display 30 where the user continues to compose the user application 18 that is illustrated in Fig. 2 a. The user has selected the symbol box 54 and therefore the symbol box 54 is highlighted. Furthermore, an additional box 80 has been created by the user and this box 80 appears to the right in the upper area of the display. In the drop down menu 66 the user has selected the symbol "decreasing" indicated by a downwards directed arrow.

The further composition of the user application 18 is illustrated in Fig. 3 a) and Fig. 3 b). In Fig. 3 a) it can be seen that the downwards directed arrow is shown in box 80. In Fig. 3 b) the user application 18 is completed and the numerical value box 72 shows 2. The unit box 74 shows a unit 16' that is a temperature per time unit "°C/min" and the action box 82 shows the action 14 MIN. Thus, all in all the user applications 18 reads:
If the temperature falls below 80 °C or if the temperature falls at a rate of minimum 2 °C per minute, the pump goes to MIN operation. Preferably the MIN operation is preset state of operation. By way of example the MIN operation may correspond to 2 % of the maximum speed of the motor.

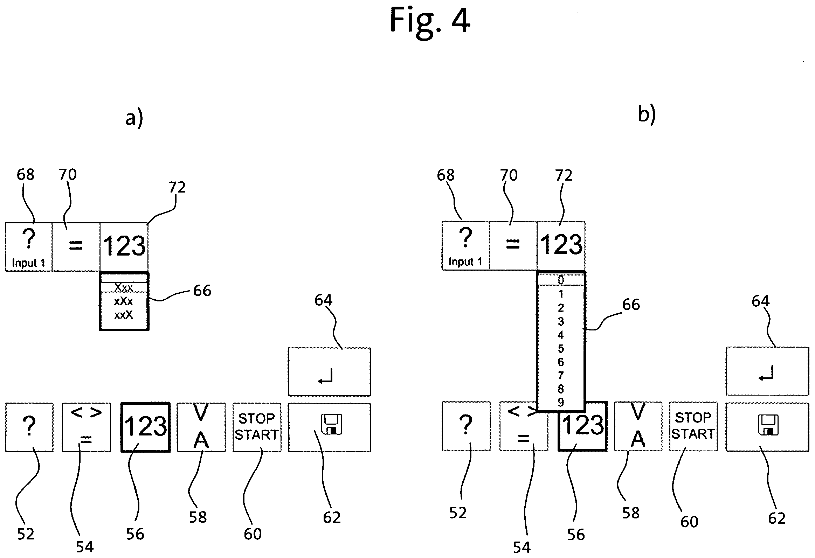

Fig. 4 illustrates composition of another user application 18. This user application 18 is intended to control the pump operation according to a voltage input. In Fig. 4 a) the user of the pump 2 has selected an input "Input 1" in the variable box 68. "input 1" may be any suitable type of input. The operator box 70 shows the symbol equal to indicated by mathematical symbol "=". The user has just selected the numerical value box 72 and the drop-down menu box 66 gives a list that the user can choose from. In Fig. 4 b) the user is selecting the first digit of the numerical value. This first digit is "0".

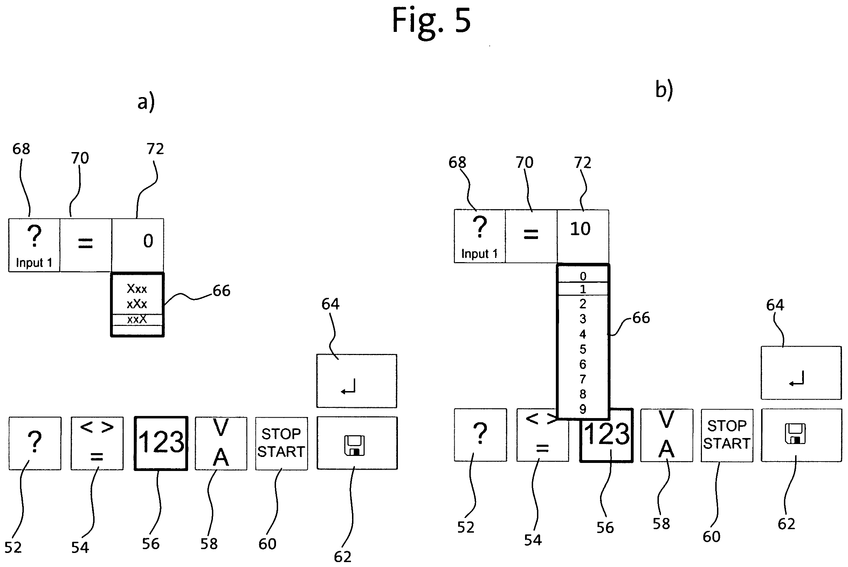

In Fig. 5 a) it can be seen that the first digit of the numerical value is "0" indicated in the numerical value box 72. In Fig. 5 b) the second digit of the numerical value has been selected from drop-down menu box 66. The second digit is "1" and thus the value is "10" as illustrated in the numerical value box 72 in Fig. 5 b).

In Fig. 6 a) the user application sequence 88 is shown. This user application sequence 88 reads: if input 1 is greater than or equal to 10 volt then the set point is 100%.

Fig. 6 b) illustrates a user application 18 comprising four user application sequence sections 86, 88, 90, 92. The first section 86 defines that if the input voltage is below 10 volt and above 3 volt then the set point is adjusted linearly between 10% and 100% according to the input voltage. This is illustrated by a linear curve symbol 22. The second section 88 defines that if the input voltage is larger than or equal to 10 volt then the set point is set to 100%. The third section 90 defines that if the input voltage is 3 volt then the set point is set to 10%. The fourth section 92 defines that if the input voltage is lower than 3 volt then the pump stops.

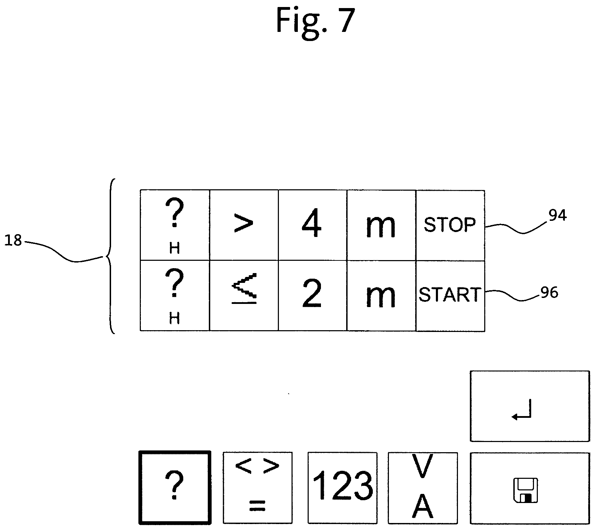

Fig. 7 illustrates a user application 18 having two lines 94, 96. The first line 94 defines that if the head exceeds 4 meters (indicated with "m") then the pump 2 stops. The second line 96 defines that if the head equals or falls below 2 m then the pump 2 is activated. It is possible to have a huge number of various user applications 18. One example of such user application 18 may define that the pump 2 is set to start at the same hour every day.

It would be possible to use different types of user interfaces and ways of creating the user applications 18.

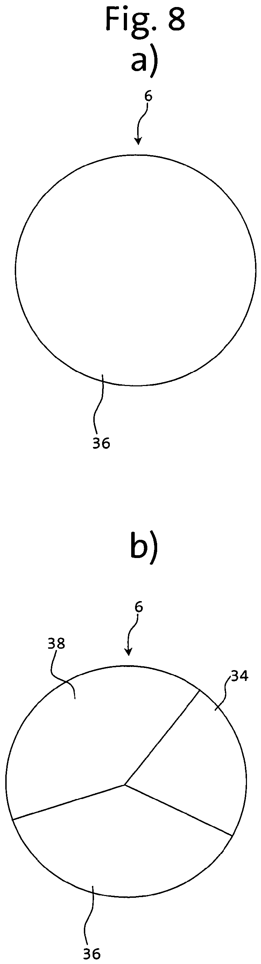

Fig 8 a) is a schematical view of a storage 6 of a control device for a prior art pump. The storage 6 comprises a basic function storage 36 that is used to store basic applications. These basic applications may be any type of application that is needed for carrying out the basic function of the pump 2. The user of the pump can change settings and parameters in the basic function storage 36 thus programming the preset applications to the requested needs according to prior art. However, the user of the pump is restricted from creating new applications that are not already included in the basic function storage 36.

Fig. 8 b) is a schematical view of a storage 6 according to the invention. The storage 6 comprises a user application storage 34 that is configured to store user applications 18. These user applications 18 may, by way of example, be composed by the user or may be pre-installed. The user applications may also be downloaded to the user application storage 34. The storage 6 further more comprises a basic function storage 36 that is used to store basic applications. These basic applications may be any type of application that is needed for carrying out the basic function of the pump 2. The storage 6 moreover comprises an interpreter storage 38 that is allocated for the interpretation and execution of the user applications 18 that are stored in the user application storage 34.

Hereby the user of the pump 2 can create user applications that can be user specific and meet individual user requirements.

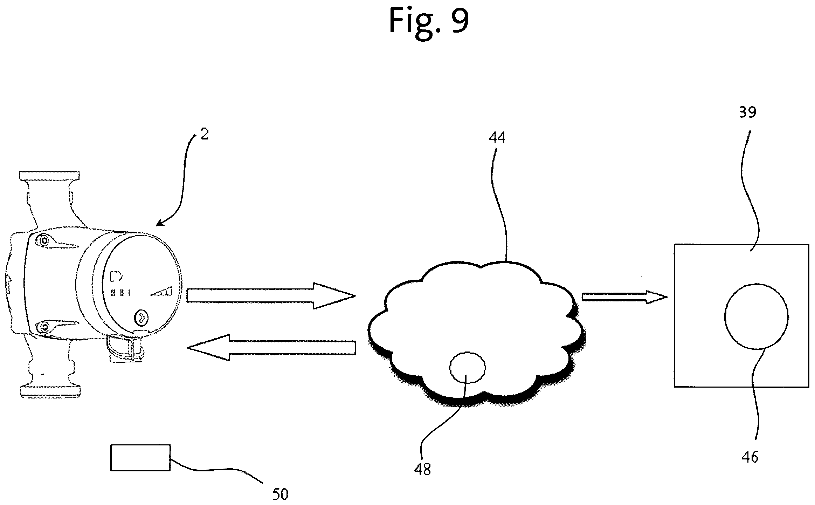

Fig. 9 is a schematical view of a pump 2 according to one embodiment of the invention. The pump 2 is configured to communicate via the Internet 44. Information and data such as user applications 18 may be uploaded and downloaded to the pump 2. Weather forecast information 48 may, by way of example, be sent to the pump 2. The pump 2 may also upload pump specific information 46 to an external receiver 39 by using the Internet 44. An external memory 50 is provided so that it would be possible to apply user applications 18 that are stored in the external memory 50. The user applications 18 may, by way of example, be downloaded from the Internet 44 to the external memory 50.

### List of reference numerals

- 2: - Pump
- 4: - Control device
- 6: - Storage means
- 8: - Microprocessor
- 10: - Operator (e.g. a logical operator)
- 12: - Scalar parameter
- 14: - Action
- 16, 16': - Unit
- 18: - User application
- 22: - Linear curve symbol
- 24: - Computer
- 26: - Cable
- 28: - Interface
- 30: - Display
- 32: - Icon
- 34: - User application storage
- 36: - Basic function storage
- 38: - Interpreter storage
- 39: - External receiver
- 40: - Remote control
- 42: - Handheld device (e.g. a mobile phone)
- 44: - Internet
- 46: - Pump specific information
- 48: - Weather forecast information
- 50: - External storage means
- 52: - Variable box
- 54: - Symbol box
- 56: - Numerical value box
- 58: - Unit box
- 60: - Action box
- 62: - Save and run box
- 64: - New line box
- 66: - Drop-down menu box
- 68, 70, 72, 74,: - Boxes
- 76, 78, 80, 82: - Boxes
- 86: - First user application sequence
- 88: - Second user application sequence
- 90: - Third user application sequence
- 92: - Fourth user application sequence
- 94: - First line
- 96: - Second line

## Claims

1. An electrically driven circulator pump (2) comprising:
a) an electrical motor;
b) a control device (4) that comprises storage means (6) and a microprocessor (8) and is configured to receive data information, where the control device (4) is adapted to control the activity of the motor, **characterised in that** the storage means (6) comprises a user application storage (34) and a interpreter storage (38) and that the control device (4) is configured to receive data information that constitutes a user defined user application including a program (18) that can be executed by the pump's microprocessor (8) as one or more user application sequences (86, 88).

2. An electrically driven circulator pump (2) according to claim 1 **characterised in that** the control device (4) is configured to receive data information comprising one or more logical operators (10), one or more scalar parameters (12) and one or more actions (14), where the data information constitute a user application (18) that can be executed by the pump's microprocessor (8) as one or more user application sequences (86, 88).

3. An electrically driven circulator pump (2) according to claim 1 or claim 2 **characterised in that** the control device (4) is configured to receive data information that comprises one or more logical operators (10) and one or more scalar parameters (12), one or more actions (14), and one or more units (16, 16'), where the data information constitute a user application (18) that can be executed by the pump's microprocessor (8) as one or more user application sequences (86, 88).

4. An electrically driven circulator pump (2) according to one of the preceding claims **characterised in that** the pump (2) is configured to receive data information from one or more external devices (24, 40, 42, 50) and that the pump (2) is configured to be controlled on the basis of the data information that is sent to the storage means (6) of the control device (4) from one or more external devices (24, 40, 42, 50) and that the data information that is sent to the storage means (6) constitutes a user application (18) that is suitable for being executed by the pump's microprocessor (8) as one or more user application sequences (86, 88).

5. An electrically driven circulator pump (2) according to one of the preceding claims **characterised in that** the pump (2) comprises an interface (28) that is configured to be used to provide data information to the storage means (6) and that the data information constitute a user application (18) that is suitable for being executed by the pump's microprocessor (8).

6. An electrically driven circulator pump (2) according to one of the preceding claims **characterised in that** the pump (2) comprises a display (30) that is configured to display a number of preset icons (32) that correspond to a list of operators (10), parameters (12), and actions (14) and that a user application (18) can be made by selecting between the preset icons (32).

7. An electrically driven circulator pump (2) according to one of the preceding claims **characterised in that** the pump (2) is configured to receive or upload user applications (18) through a web forum or a web service.

8. An electrically driven circulator pump (2) according to claim 7 **characterised in that** the pump (2) is configured to download user applications (18) to the pump (2) so that the pump (2) is capable of performing in accordance with specific requirements.

9. An electrically driven circulator pump (2) according to claim 7 **characterised in that** the pump (2) is configured to upload user applications (18).

10. An electrically driven circulator pump (2) according to one of the preceding claims **characterised in that** the pump (2) is configured to receive user applications (18) through an external storage means (50) that is configured to be connected to the pump (2).

11. An electrically driven circulator pump (2) according to one of the preceding claims **characterised in that** the pump (2) is configured to receive user applications (18) that are sent to the pump (2).

12. An electrically driven circulator pump (2) according to claim 11 **characterised in that** the pump (2) is configured to receive user applications (18) via an email that is sent to the pump (2).

13. An electrically driven circulator pump (2) according to one of the preceding claims **characterised in that** the pump (2) is connected to the Internet (44) and that the pump (2) is configured to upload pump specific information (46) to an external receiver (39) and that the pump (2) is configured to perform automatic and selective download of user applications (18) that are suitable for the specific pump type.

14. An electrically driven circulator pump (2) according to one of the preceding claims **characterised in that** the pump (2) is connected to the Internet (44) and that the pump (2) is configured to perform automatic and selective download of information (48) and use this information (48) in one or more user applications (18).

15. An electrically driven circulator pump (2) according to claim 12 **characterised in that** the pump (2) is connected to the Internet (44) and that the pump (2) is configured to perform automatic and selective download of information and use this information in one or more user applications (18) on the basis of one or more preset criteria.

## Patentansprüche

1. Elektrisch angetriebene Umwälzpumpe (2), umfassend:
a) einen Elektromotor;
b) eine Steuervorrichtung (4), die ein Speichermittel (6) und einen Mikroprozessor (8) umfasst und dazu ausgestaltet ist, Dateninformationen zu empfangen, wobei die Steuervorrichtung (4) dazu ausgelegt ist, die Aktivität des Motors zu steuern, **dadurch gekennzeichnet, dass** das Speichermittel (6) einen Benutzeranwendungsspeicher (34) und einen Interpreter-Speicher (38) umfasst und dass die Steuervorrichtung (4) dazu ausgestaltet ist, Dateninformationen zu empfangen, die eine benutzerdefinierte Benutzeranwendung darstellen, die ein Programm (18) enthält, das durch den Mikroprozessor (8) der Pumpe als eine oder mehrere Benutzeranwendungsfolgen (86, 88) ausgeführt werden kann.

2. Elektrisch angetriebene Umwälzpumpe (2) nach Anspruch 1, **dadurch gekennzeichnet, dass** die Steuervorrichtung (4) dazu ausgestaltet ist, Dateninformationen zu empfangen, die einen oder mehrere logische Operatoren (10), einen oder mehrere skalare Parameter (12) und eine oder mehrere Aktionen (14) umfassen, wobei die Dateninformationen eine Benutzeranwendung (18) darstellen, die durch den Mikroprozessor (8) der Pumpe als eine oder mehrere Benutzeranwendungsfolgen (86, 88) ausgeführt werden kann.

3. Elektrisch angetriebene Umwälzpumpe (2) nach Anspruch 1 oder 2, **dadurch gekennzeichnet, dass** die Steuervorrichtung (4) dazu ausgestaltet ist, Dateninformationen zu empfangen, die einen oder mehrere logische Operatoren (10) und einen oder mehrere skalare Parameter (12), eine oder mehrere Aktionen (14) und eine oder mehrere Einheiten (16, 16') umfassen, wobei die Dateninformationen eine Benutzeranwendung (18) darstellen, die durch den Mikroprozessor (8) der Pumpe als eine oder mehrere Benutzeranwendungsfolgen (86, 88) ausgeführt werden kann.

4. Elektrisch angetriebene Umwälzpumpe (2) nach einem der vorhergehenden Ansprüche, **dadurch gekennzeichnet, dass** die Pumpe (2) dazu ausgestaltet ist, Dateninformationen von einer oder mehreren externen Vorrichtungen (24, 40, 42, 50) zu empfangen, und dass die Pumpe (2) dazu ausgestaltet ist, auf der Grundlage der Dateninformationen gesteuert zu werden, die von einer oder mehreren externen Vorrichtungen (24, 40, 42, 50) an das Speichermittel (6) der Steuervorrichtung (4) gesendet werden, und dass die Dateninformationen, die an das Speichermittel (6) gesendet werden, eine Benutzeranwendung (18) darstellen, die dazu geeignet ist, durch den Mikroprozessor (8) der Pumpe als eine oder mehrere Benutzeranwendungsfolgen (86, 88) ausgeführt zu werden.

5. Elektrisch angetriebene Umwälzpumpe nach einem der vorhergehenden Ansprüche, **dadurch gekennzeichnet, dass** die Pumpe (2) eine Schnittstelle (28) umfasst, die dazu ausgestaltet ist, dazu benutzt zu werden, dem Speichermittel (6) Dateninformationen bereitzustellen, und dass die Dateninformationen eine Benutzeranwendung (18) darstellen, die dazu geeignet ist, durch den Mikroprozessor (8) der Pumpe ausgeführt zu werden.

6. Elektrisch angetriebene Umwälzpumpe nach einem der vorhergehenden Ansprüche, **dadurch gekennzeichnet, dass** die Pumpe (2) eine Anzeige (30) umfasst, die dazu ausgestaltet ist, mehrere voreingestellte Symbole (32) anzuzeigen, die einer Liste von Operatoren (10), Parametern (12) und Aktionen (14) entsprechen, und dass eine Benutzeranwendung (18) durch Auswählen zwischen den voreingestellten Symbolen (32) vorgenommen werden kann.

7. Elektrisch angetriebene Umwälzpumpe (2) nach einem der vorhergehenden Ansprüche, **dadurch gekennzeichnet, dass** die Pumpe (2) dazu ausgestaltet ist, Benutzeranwendungen (18) über ein Web-Forum oder einen Web-Dienst zu empfangen oder hochzuladen.

8. Elektrisch angetriebene Umwälzpumpe (2) nach Anspruch 7, **dadurch gekennzeichnet, dass** die Pumpe (2) dazu ausgestaltet ist, Benutzeranwendungen (18) in die Pumpe (2) herunterzuladen, so dass die Pumpe (2) in der Lage ist, gemäß konkreten Anforderungen zu arbeiten.

9. Elektrisch angetriebene Umwälzpumpe (2) nach Anspruch 7, **dadurch gekennzeichnet, dass** die Pumpe (2) dazu ausgestaltet ist, Benutzeranwendungen (18) hochzuladen.

10. Elektrisch angetriebene Umwälzpumpe (2) nach einem der vorhergehenden Ansprüche, **dadurch gekennzeichnet, dass** die Pumpe (2) dazu ausgestaltet ist, Benutzeranwendungen (18) über ein externes Speichermittel (50) zu empfangen, das dazu ausgestaltet ist, mit der Pumpe (2) verbunden zu werden.

11. Elektrisch angetriebene Umwälzpumpe (2) nach einem der vorhergehenden Ansprüche, **dadurch gekennzeichnet, dass** die Pumpe (2) dazu ausgestaltet ist, Benutzeranwendungen (18) zu empfangen, die an die Pumpe (2) gesendet werden.

12. Elektrisch angetriebene Umwälzpumpe (2) nach Anspruch 11, **dadurch gekennzeichnet, dass** die Pumpe (2) dazu ausgestaltet ist, Benutzeranwendungen (18) über eine E-Mail zu empfangen, die an die Pumpe (2) gesendet wird.

13. Elektrisch angetriebene Umwälzpumpe (2) nach einem der vorhergehenden Ansprüche, **dadurch gekennzeichnet, dass** die Pumpe (2) mit dem Internet (44) verbunden ist und dass die Pumpe (2) dazu ausgestaltet ist, pumpenspezifische Informationen (46) in einen externen Empfänger (39) hochzuladen, und dass die Pumpe (2) dazu ausgestaltet ist, einen automatischen und gezielten Download von Benutzeranwendungen (18) durchzuführen, die für die konkrete Pumpenart geeignet sind.

14. Elektrisch angetriebene Umwälzpumpe (2) nach einem der vorhergehenden Ansprüche, **dadurch gekennzeichnet, dass** die Pumpe (2) mit dem Internet (44) verbunden ist und dass die Pumpe (2) dazu ausgestaltet ist, einen automatischen und gezielten Download von Informationen (48) durchzuführen und diese Informationen (48) in einer oder mehreren Benutzeranwendungen (18) zu benutzen.

15. Elektrisch angetriebene Umwälzpumpe (2) nach Anspruch 12, **dadurch gekennzeichnet, dass** die Pumpe (2) mit dem Internet (44) verbunden ist und dass die Pumpe (2) dazu ausgestaltet ist, einen automatischen und gezielten Download von Informationen durchzuführen und diese Informationen in einer oder mehreren Benutzeranwendungen (18) auf der Grundlage eines oder mehrerer voreingestellter Kriterien zu benutzen.

## Revendications

1. Pompe de recirculation (2) électriquement entraînée comprenant:
a) un moteur électrique,
b) un dispositif de commande (4) qui comporte des moyens de stockage (6) et un microprocesseur (8) et qui est configuré pour recevoir des données d'information, le dispositif de commande (4) étant adapté pour commander l'activité du moteur, **caractérisée en ce que** les moyens de stockage (6) comprennent un stockage d'application utilisateur (34) et un stockage d'interprétation (38) et **en ce que** le dispositif de commande (4) est configuré pour recevoir des données d'information qui constituent une application utilisateur définie par l'utilisateur et comprenant un programme (18), qui peut être mise en oeuvre par le microprocesseur (8) de la pompe en une ou davantage de séquences d'application utilisateur (86, 88).

2. Pompe de recirculation (2) électriquement entraînée selon la revendication 1, **caractérisée en ce que** le dispositif de commande (4) est configuré pour recevoir des données d'information qui comportent un ou davantage d'opérateurs logiques (10), un ou davantage de paramètres scalaires (12) et une ou davantage d'actions (14), les données d'information constituant une application utilisateur (18) qui peut être mise en oeuvre par le microprocesseur (8) de la pompe en une ou davantage de séquences d'application utilisateur (86, 88).

3. Pompe de recirculation (2) électriquement entraînée selon la revendication 1 ou la revendication 2, **caractérisée en ce que** le dispositif de commande (4) est configuré pour recevoir des données d'information qui comportent un ou davantage d'opérateurs logiques (10) et un ou davantage de paramètres scalaires (12), une ou davantage d'actions (14) et une ou davantage d'unités (16, 16'), les données d'information constituant une application utilisateur (18) qui peut être mise en oeuvre par le microprocesseur (8) de la pompe en une ou davantage de séquences d'application utilisateur (86, 88).

4. Pompe de recirculation (2) électriquement entraînée selon l'une des revendications précédentes, **caractérisée en ce que** la pompe (2) est configurée pour recevoir des données d'information provenant d'un ou davantage de dispositifs extérieurs (24, 40, 42) et **en ce que** la pompe (2) est configurée pour être commandée sur la base des données d'information qui sont envoyées aux moyens de stockage (6) du dispositif de commande (4) par un ou davantage de dispositifs extérieurs (24, 40, 42, 50) et **en ce que** les données d'information qui sont envoyées aux moyens de stockage (6) constituent une application utilisateur (18) qui est adaptée pour être mise en oeuvre par le microprocesseur (8) de la pompe en une ou davantage de séquences d'application utilisateur (86, 88).

5. Pompe de recirculation (2) électriquement entraînée selon l'une des revendications précédentes, **caractérisée en ce que** la pompe (2) comprend une interface (28) qui est configurée pour être utilisée pour fournir des données d'information aux moyens de stockage (6) et **en ce que** les données d'information constituent une application utilisateur (18) qui est adaptée pour être mise en oeuvre par le microprocesseur (8) de la pompe.

6. Pompe de recirculation (2) électriquement entraînée selon l'une des revendications précédentes, **caractérisée en ce que** la pompe (2) comprend un moyen d'affichage (30) qui est configuré pour afficher un nombre d'icônes prédéterminées (32) qui correspondent à une liste d'opérateurs (10), de paramètres (12) et d'actions (14) et **en ce qu'**une application utilisateur (18) peut être constituée en choisissant entre les icônes prédéterminées (32).

7. Pompe de recirculation (2) électriquement entraînée selon l'une des revendications précédentes, **caractérisée en ce que** la pompe (2) est configurée pour recevoir ou charger des application utilisateur (18) via un forum Web ou un service Web.

8. Pompe de recirculation (2) électriquement entraînée selon la revendication 7, **caractérisée en ce que** la pompe (2) est configurée pour charger des applications utilisateur (18) pour la pompe (2) de façon que la pompe (2) soit capable de fonctionner selon des exigences spécifiques.

9. Pompe de recirculation (2) électriquement entraînée selon la revendication 7, **caractérisée en ce que** la pompe (2) est configurée pour charger des applications utilisateur (18).

10. Pompe de recirculation (2) électriquement entraînée selon l'une des revendications précédentes, **caractérisée en ce que** la pompe (2) est configurée pour recevoir des applications utilisateur (18) via des moyens de stockage extérieurs (50) qui sont configurés pour être connectés à la pompe (2).

11. Pompe de recirculation (2) électriquement entraînée selon l'une des revendications précédentes, **caractérisée en ce que** la pompe (2) est configurée pour recevoir des applications utilisateur (18) qui sont envoyées à la pompe (2).

12. Pompe de recirculation (2) électriquement entraînée selon la revendication 11, **caractérisée en ce que** la pompe (2) est configurée pour recevoir des applications utilisateur (18) via un message électronique (e-mail) qui est envoyé à la pompe (2).

13. Pompe de recirculation (2) électriquement entraînée selon l'une des revendications précédentes, **caractérisée en ce que** la pompe (2) est connectée à Internet (44) et **en ce que** la pompe (2) est configurée pour charger des informations spécifiques à la pompe (46) dans un récepteur extérieur (39) et **en ce que** la pompe (2) est configurée pour effectuer un chargement automatique et sélectif d'applications utilisateur (18) qui sont adaptées au type de pompe particulier.

14. Pompe de recirculation (2) électriquement entraînée selon l'une des revendications précédentes, **caractérisée en ce que** la pompe (2) est connectée à Internet (44) et **en ce que** la pompe (2) est configurée pour effectuer un chargement automatique et sélectif d'informations (48) et pour utiliser ces informations (48) dans une ou davantage d'applications utilisateur (18).

15. Pompe de recirculation (2) électriquement entraînée selon la revendication 12, **caractérisée en ce que** la pompe (2) est connectée à Internet (44) et **en ce que** la pompe (2) est configurée pour effectuer un chargement automatique et sélectif d'informations et pour utiliser ces informations dans une ou davantage d'applications utilisateur (18) sur la base d'un ou davantage de critères prédéterminés.
